Europäisches Patentamt

European Patent Office

Office européen des brevets

(11) Numéro de publication : **0 399 884 B1**

(12) **FASCICULE DE BREVET EUROPEEN**

(45) Date de publication du fascicule du brevet :
**30.12.92 Bulletin 92/53**

(51) Int. Cl.⁵ : **F25D 31/00, F16H 25/20,**
 **F16H 57/02**

(21) Numéro de dépôt : **90401335.6**

(22) Date de dépôt : **18.05.90**

(54) **Surgélateur à plaques.**

(30) Priorité : **22.05.89 FR 8906640**

(43) Date de publication de la demande :
**28.11.90 Bulletin 90/48**

(45) Mention de la délivrance du brevet :
**30.12.92 Bulletin 92/53**

(84) Etats contractants désignés :
**AT BE CH DE DK ES GB IT LI LU NL SE**

(56) Documents cités :
**EP-A- 0 163 602
WO-A-80/01341
FR-A- 2 595 780
GB-A- 2 166 536
US-A- 2 882 697
US-A- 4 392 390**

(73) Titulaire : **PIERRE GUERIN S.A.**
**B.P. 12**
**F-79210 Mauze sur le Mignon (FR)**

(72) Inventeur : **Quilliou, Guy**
**20, Square des Frères Montgolfier**
**F-79000 Niort (FR)**

(74) Mandataire : **Fontanié, Etienne**
**FIVES-CAIL BABCOCK 38, rue de la**
**République**
**F-93107 Montreuil Cédex (FR)**

# Description

La présente invention a trait aux surgélateurs à plaques constitués par une pile de plaques horizontales creuses, dans lesquelles circule un fluide réfrigérant et placées à l'intérieur d'une cabine isolante comportant sur deux faces opposées des fentes pour le chargement et le déchargement des produits à surgeler, respectivement surgelés, des moyens pour déplacer verticalement la pile de plaques et amener chaque plaque au niveau des dites fentes, et des moyens pour charger les produits à surgeler sur la plaque se trouvant au niveau de la station de chargement, à travers l'une des fentes, et simultanément décharger les produits surgelés, à travers l'autre fente.

L'invention concerne plus particulièrement les surgélateurs de ce type dans lesquels les déplacements verticaux des plaques sont réalisés au moyen de vérins à vis (voir, par exemple, le document GB-A-2 166 536). Ces vérins qui ont l'avantage de permettre un positionnement précis des plaques posent des problèmes de fonctionnement dus à la formation de glace sur les parties actives des vérins aux basses températures auxquelles ils doivent fonctionner.

Le but de la présente invention est d'assurer une lubrification permanente des parties actives des vérins et d'éviter la formation de glace sur celles-ci.

Le surgélateur objet de la présente invention est caractérisé en ce que chacun des vérins supportant la pile de plaques est constitué par une vis, un écrou fixé à une extrémité d'un tube concentrique à la vis, l'autre extrémité de ce tube étant fermée, et une enveloppe tubulaire concentrique à la vis et audit tube et dont le fond est traversé de manière étanche par ledit tube, en ce que l'un des éléments, vis ou écrou, de chaque vérin est suspendu de façon pendulaire à la charpente du surgélateur et accouplé à un moteur permettant de l'entrainer en rotation, la pile de plaques étant suspendue à l'autre élément des vérins, et en ce que l'intérieur dudit tube communique avec l'intérieur de ladite enveloppe et le tube et l'enveloppe définissent un volume fermé rempli d'huile et relié à sa partie supérieure à un réservoir d'expansion d'air également fermé.

Grâce à cette disposition, la partie active de la vis est lubrifiée en permanence et on empêche le renouvellement de l'air autour de la vis et de l'écrou, ce qui évite la formation de glace sur les filets, la vapeur d'eau qui peut se trouver initialement dans l'air remplissant le vérin et le réservoir d'expansion se condensant et se congelant dans ce dernier.

Dans une forme de réalisation préférée, le réservoir d'expansion est constitué par un élément creux, par exemple un poteau adjacent au vérin, de la charpente.

L'enveloppe tubulaire sera avantageusement réalisée en un matériau transparent ou translucide, par exemple en résine renforcée de fibres de verre, pour permettre une vérification du niveau d'huile.

Le système vis-écrou pourra être un système à billes ou rouleaux circulants.

Suivant une forme de réalisation particulière, la vis du vérin est suspendue pendulairement à la charpente de l'appareil et supportée par un palier à rotule dont le corps est fixé sur la charpente, un plateau portant les plaques étant suspendu à l'extrémité inférieure du tube solidaire de l'écrou, et l'enveloppe tubulaire est maintenue entre le corps du palier et une bague reliée au corps du palier par des tirants et constituant le fond de l'enveloppe traversé par le tube, la flexibilité de l'enveloppe et des tirants étant suffisante pour autoriser les mouvements pendulaires de faible amplitude du vérin.

D'autres avantages de l'invention apparaitront à la lecture de la description qui suit et se réfère aux dessins l'accompagnant qui montrent, à titre d'exemple non limitatif, un surgélateur conforme à l'invention.

Sur ces dessins :

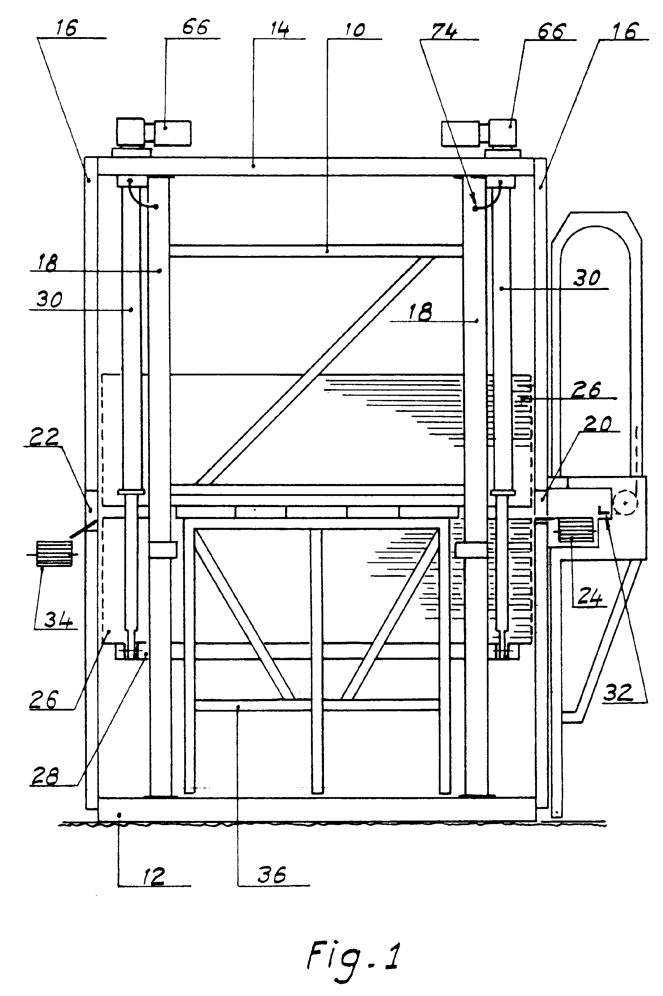

La figure 1 est une vue en élévation du surgélateur, l'une des parois de la cabine ayant été enlevée pour montrer l'intérieur de l'appareil; et

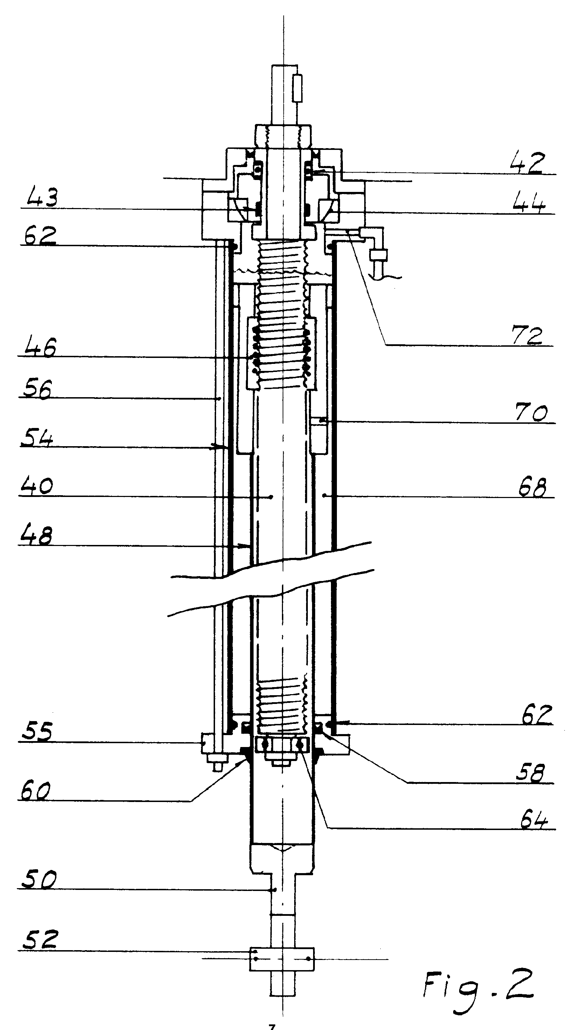

La figure 2 est une vue en coupe longitudinale de l'un des vérins supportant les plaques du surgélateur.

Le surgélateur représenté sur les dessins comprend une cabine à l'intérieur de laquelle se trouve la pile de plaques et les moyens permettant de la déplacer verticalement suivant un mouvement ascendant ou descendant.

La cabine est formée d'une charpente 10, d'un plancher 12, d'un plafond 14 et de quatre parois 16. La charpente comporte des poteaux creux 18 fixés sur le plancher et supportant le plafond. Le plancher, le plafond et les quatre parois sont calorifugées. L'intérieur de la cabine ne communique avec l'extérieur que par deux fentes 20 et 22 prévues dans les parois avant et arrière, respectivement, au niveau d'un transporteur 24 amenant les produits à surgeler.

La pile de plaques 26 repose sur un plateau 28 supporté par quatre vérins 30 suspendus au plafond de la cabine. Les plaques reposent les unes sur les autres par l'intermédiaire de cales maintenant entre elles un écartement légèrement supérieur à l'épaisseur des produits à surgeler. Des guides verticaux empêchent le balancement de la pile.

Pour charger les produits à surgeler sur les plaques, on amène ces dernières, l'une après l'autre, au niveau du transporteur 24, au moyen de vérins 30, et on introduit les produits dans la cabine, rangée par rangée, à travers la fente 20, au moyen d'un poussoir 32. Simultanément, les produits surgelés se trouvant sur la plaque sont expulsés, à travers la fente 22 et tombent sur un transporteur d'évacuation 34. Pour faciliter le chargement, on augmente l'écartement entre la plaque qui doit être chargée et la plaque située immédiatement au-dessus de la manière suivante: lorsqu'on soulève la pile de plaques pour amener une nouvelle plaque au niveau du transporteur 24, on déplace la pile sur une hauteur supérieure à l'écartement entre plaques de façon à ce que la plaque qui vient d'être chargée puisse venir reposer sur des consoles fixées sur le sommet de deux supports 36 déposés de part et d'autre de la pile et articulés sur le plancher 12.

Ces supports sont normalement poussés par des ressorts vers une position où les consoles font saillie à l'intérieur de la pile de plaques pour pouvoir supporter les plaques situées au-dessus de leur plan d'appui, et sont munis de rampes de sorte qu'ils peuvent être écartés par les plaques au cours de leur mouvement ascendant. Lorsque la plaque qui vient d'être chargée se trouve au-dessus du plan d'appui des consoles, celles-ci reprennent leur position normale; en faisant descendre la pile de plaques, cette plaque et celles qui sont au-dessus viennent reposer sur les consoles.

Etant donné qui la différence de niveaux entre le plan d'appui des consoles et le plan du transporteur 24 est supérieure à l'écartement entre plaques, la plaque qui doit être chargée se trouve alors au-dessus du niveau du transporteur et le mouvement descendant est poursuivi jusqu'à la mise à niveau.

Dans ce qui précède, on a supposé que les plaques sont chargées et déchargées en soulevant la pile, la plaque supérieure étant chargée en premier et la plaque inférieure en dernier; lorsque toutes les plaques sont chargées, la pile est amenée en position basse et on commence un nouveau chargement par la plaque supérieure. On pourrait aussi charger et décharger les plaques au cours d'un mouvement descendant, ou charger une plaque sur deux au cours du mouvement ascendant et les plaques restantes au cours d'un mouvement descendant. Pour que ces deux derniers modes de chargement soient possibles, il faut que les supports articulés 36 portant les consoles soient commandés par des vérins permettant de les écarter pour permettre le passage des plaques au cours du mouvement descendant de la pile.

Les vérins 30 sont des vérins à vis à billes circulantes. Chacun d'eux comprend une vis 40 suspendue au plafond 14, par l'intermédiaire d'une butée 42, d'un palier à roulements 43 et d'un palier à rotule 44, et un écrou 46 fixé à l'extrémité supérieure d'un tube 48, concentrique à la vis et attelé au plateau 28 par l'intermédiaire d'une chape 50 et d'un axe 52; la chape est solidaire d'un bouchon emmanché dans l'extrémité inférieure du tube et soudé sur celui-ci. La vis etl'écrou sont enfermés dans une enveloppe tubulaire 54, concentrique à la vis et maintenue entre le corps du palier 44, qui est fixé sur le plafond 14, et une bague de guidage 55 montée avec un faible jeu sur le tube 48 et reliée au corps du palier par trois tirants 56. La bague 55 est munie d'un joint d'étanchéité 58 et d'un racleur 60 frottant sur le tube 48;le racleur sert à détacher la couche de glace qui pourrait se former sur le tube et détériorer le joint d'étanchéité. Des joints toriques 62 assurent l'étanchéité entre l'enveloppe 54 et le corps du palier 44, d'une part, et la bague 55, d'autre part. La flexibilité de l'enveloppe 54 et des tirants 56 est suffisante pour autoriser les mouvements pendulaires de faible amplitude du vérin. L'enveloppe pourra, par exemple, être réalisée en une résine renforcée de fibres de verre.

A son extrémité inférieure, la vis 40 porte un galet 64 monté sur roulement à billes et dont le diamètre est légèrement inférieur au diamètre intérieur du tube 48 de façon à ne pas gêner les mouvements de translation du tube tout en limitant les déformations en flexion de l'ensemble vis - tube.

Le volume intérieur du tube 48 communique avec l'espace à section annulaire 68 ménagé entre le tube et l'enveloppe 54 par un ou plusieurs trous 70 percés dans l'écrou ou dans le tube; un jeu suffisant est prévu entre la vis et le tube et une ou plusieurs rainures sont usinées sur la périphérie du galet 64 pour assurer cette communication. L'espace 68 communique par ailleurs avec le volume intérieur de l'enveloppe 54, au-dessus de l'écrou, par des rainures usinées dans la périphérie de l'écrou. Un canal 72 usiné dans le corps du palier 44 et un tuyau flexible 74 mettent l'intérieur de l'enveloppe 54 en communication avec l'intérieur d'un poteau 18 voisin du vérin. Le volume intérieur du tube 48 et l'espace 68 sont remplis d'huile assurant la lubrification de la vis. Le poteau 18 qui est creux et étanche sert de réservoir d'expansion et cette disposition évite l'entrée d'air extérieur, chargé d'humidité, dans l'enveloppe 54 lorsque le niveau d'huile baisse suite à l'allongement du vérin.

A son extrémité supérieure, la vis de chaque vérin est accouplée à un groupe moteur-réducteur-frein 66 permettant de faire tourner la vis dans les deux sens, pour déplacer les plaques verticalement, et de la bloquer dans n'importe quelle position, pour maintenir les plaques à la hauteur voulue. Les groupes 66 comportent des compteurs qui permettent de mesurer les déplacements des plaques. Ils peuvent être commandés manuellement ou automatiquement. Pour le chargement des produits à surgeler sur les plaques, les groupes 66 sont commandés individuellement par des détecteurs de proximité placés au niveau du transporteur 24, aux quatre angles de la pile de plaques.

Des modifications peuvent évidemment être apportées à la forme de réalisation décrite par la substitution de moyens techniques équivalents. En particulier, la position des vérins pourrait être inversée, le tube 48 étant monté rotatif sur la charpente et le plateau 28 étant accroché à vis 40.

## Revendications

1. Surgélateur à plaques constitué par une pile de plaques horizontales (26) placée à l'intérieur d'une cabine isolante comportant sur deux faces opposées des fentes (20,22) pour le chargement des produits à surgeler et le déchargement des produits surgelés, et des moyens pour déplacer verticalement la pile de plaques et amener successivement chaque plaque au niveau desdites fentes, lesdits moyens comportant des vérins verticaux à vis (30), caractérisé en ce que chaque vérin (30) est constitué par une vis (40), un écrou (46) fixé à une extrémité d'un tube (48) concentrique à la vis (40) et une enveloppe tubulaire (54), concentrique à la vis (40) et au tube (48) et dont le fond est traversé de manière étanche par ledit tube, en ce que l'autre extrémité dudit tube est fermée, en ce que l'un des éléments, vis (40) ou tube (48), de chaque vérin (30) est suspendu de façon pendulaire à la charpente (10) du surgélateur et accouplé à un moteur (66) permettant de l'entrainer en rotation, en ce que la pile de plaques (26) est suspendue à l'autre élément (40 ou 48) des vérins, et en ce que l'intérieur dudit tube (48) communique avec l'intérieur de la dite enveloppe (54) et le tube et l'enveloppe délimitent un volume clos rempli d'huile et relié à sa partie supérieure à un réservoir d'expansion d'air également fermé.

2. Surgélateur selon la revendication 1, caractérisé en ce que ledit réservoir d'expansion est constitué par un élément vertical creux (8) de la charpente (10) de l'appareil.

3. Surgélateur selon la revendication 1 ou 2, caractérisé en ce que ladite enveloppe (54) est réalisée en un matériau translucide ou transparent.

4. Surgélateur selon la revendication 1, 2 ou 3, caractérisé en ce que ladite vis (40) est suspendue pendulairement à la charpente et supportée par un palier à rotule (44) dont le corps est fixé sur la charpente (10) de l'appareil.

5. Surgélateur selon la revendication 4, caractérisé en ce que ladite enveloppe (54) est maintenue entre le corps fixe du palier à rotule (44) et une bague (55) reliée audit corps de palier par des tirants (56) et constituant le fond de l'enveloppe qui est traversé par ledit tube (48).

6. Surgélateur selon l'une quelconque des revendications précédentes, caractérisé en ce que le système vis - écrou des vérins est un système à billes ou rouleaux circulants.

7. Surgélateur selon l'une quelconque des revendications précédentes caractérisé en ce que la vis (40) porte à son extrémité libre un galet (64) monté rotatif, dont l'axe coïncide avec celui de la vis et dont le diamètre est légèrement inférieur au diamètre intérieur du tube (48) de façon à ne pas gêner les mouvements de translation relatifs du tube et de la vis tout en limitant des déformations en flexion de l'ensemble vis-tube.

## Patentansprüche

1. Plattengefrierapparat, bestehend aus einem innerhalb einer auf zwei gegenüberliegenden Seiten mit Schlitzen (20, 22) zum Beschickung bzw. Entladung des Gefrierguts versehenen isolierenden Kabine angeordneten Stapel horizontaler Platten (26), Mitteln zur vertikalen Bewegung des Plattenstapels und zur aufeinanderfolgenden Positionierung jeder der Platten auf der Höhe besagter Schlitze, wobei besagte Mittel vertikale Schraubenwinden (30) umfassen, dadurch gekennzeichnet, daß die Winden (30) je aus einer Spindel (40), einer an einem Ende eines konzentrisch zu der Spindel (40) angeordneten Rohres (48) befestigten Mutter (46) und einer konzentrisch zur Spindel (40) und besagtem Rohr (48) angeordneten rohrförmigen Hülle (54), deren Boden von besagtem Rohr dicht durchquert wird, bestehen, daß das andere Ende besagten Rohres geschlossen ist, daß eines der Elemente jeder Winde (30) - Spindel (40) oder Rohr (48) - pendelnd am Gerüst (10) des Gefrierapparates aufgehängt sowie an einen Motor (66) gekoppelt ist, der seinen Drehantrieb erlaubt, daß der Plattenstapel (26) an dem anderen Element (40 bzw. 48) der Winden aufgehängt ist, und daß der Innenraum besagten Rohres (48) mit dem Innenraum besagter Hülle (54) in Verbindung steht, und daß das Rohr und die Hülle einen geschlossenen mit Öl gefüllten und an seinem Oberteil mit einem ebenfalls geschlossenen Luftexpansionsbehälter verbundenen Raum bilden.

2. Gefrierapparat gemäß Anspruch 1, dadurch gekennzeichnet, daß besagter Expansionsbehälter von einem vertikalen hohlen Element (18) des Gerüsts (10) des Apparats gebildet wird.

3. Gefrierapparat gemäß Anspruch 1 oder 2, dadurch gekennzeichnet, daß besagte Hülle (54) aus einem lichtdurchlässigen oder durchsichtigen Material besteht.

4. Gefrierapparat gemäß Anspruch 1, 2 oder 3, dadurch gekennzeichnet, daß besagte Spindel (40) pendelnd am Gerüst aufgehängt und in einem Pendellager (44) gelagert ist, dessen Gehäuse am Gerüst (10) des Apparats befestigt ist.

5. Gefrierapparat gemäß Anspruch 4, dadurch gekennzeichnet, daß besagte Hülle (54) zwischen dem festen Gehäuse des Pendellagers (44) und einem mit besagtem Lagergehäuse durch Zuganker (56) verbundenen Ring (55), der den Boden der Hülle bildet und von besagtem Rohr (48) durchquert wird, gehalten wird.

6. Gefrierapparat gemäß irgend einem der voraufgehenden Ansprüche, dadurch gekennzeichnet, daß das Spindel/Mutter-System der Winden ein System mit umlaufenden Kugeln oder Rollen ist.

7. Gefrierapparat gemäß irgend einem der voraufgehenden Ansprüche, dadurch gekennzeichnet, daß die Spindel (40) an ihrem freien Ende eine drehbar montierte Rolle (64) trägt, deren Achse mit der der Spindel zusammenfällt und deren Durchmesser etwas kleiner als der Innendurchmesser des Rohres (48) ist, um die relativen Längesbewegungen des Rohres und der Spindel nicht zu behindern und dabei die Biegeverformungen der von Spindel und Rohr gebildeten Einheit zu begrenzen.

**Claims**

1. Plate freezer consisting of a stack of horizontal plates (26) placed inside an insulating enclosure two opposite sides of which are provided with slots (20, 22) for loading the products to be frozen and unloading the frozen products, and means for moving vertically the stack of plates and bringing successively each plate to the level of the said slots, the said means comprising vertical screw-type jacks (30), characterized in that each jack (30) consists of a screw (40), a nut (46) fixed to one end of a tube (48) concentric with the screw (40) and a tubular casing (54), concentric with the screw (40) and the tube (48) and through the bottom of which the said tube goes tightly, in that the other end of the said tube is closed, in that one of the components, screw (40) or tube (48), of each jack (30) is suspended pendularwise from the structure (10) of the freezer and coupled to a motor (66) enabling to rotate it, in that the stack of plates (26) is suspended from the other component (40 or 48) of the jacks, and in that the inside of the said tube (48) communicates with the inside of the said casing (54) and the tube and the casing delimit an enclosed volume filled with oil and the top of which is connected to air expansion tank which is enclosed too.

2. Freezer according to claim 1, characterized in that the said expansion tank consists of a hollow vertical component (18) of the structure (10) of the apparatus.

3. Freezer according to claim 1 or 2, characterized in that the said casing (54) is made of a translucent or transparent material.

4. Freezer according to claim 1, 2 or 3, characterized in that the said screw (40) is hanging pendularwise from the structure and supported by a self-aligning bearing (44) the housing of which is fixed to the structure (10) of the apparatus.

5. Freezer according to claim 4, characterized in that the said casing (54) is maintained between the fixed housing of the self-aligning bearing (44) and a ring (55) connected to the said bearing housing by tie rods (56) and constituting the bottom of the casing through which the said tube (48) goes.

6. Freezer according to anyone of the preceding claims, characterized in that the screw-nut system of the jacks is a circulating-ball or -roller system.

7. Freezer according to anyone of the preceding claims, characterized in that the free end of the screw (40) is fitted with a roller (64) mounted rotatively, the axis of which coincides with that of the screw and the diameter of which is slightly smaller than the inside diameter of the tube (48) so as not to impede the relative translation movements of the tube and of the screw while limiting the flexures of the screw-tube assembly.

Fig. 1

42

43

62

46

56

54

40

48

72

70

68

62

55

60

58

64

50

52

*Fig.2*